# EUROPEAN PATENT APPLICATION

(11) **EP 0 837 594 A2**
(43) Date of publication of application: **22.04.1998**
(21) Application number: 97308368.6
(22) Date of filing: 21.10.1997
(51) Int. Cl.: H04N 1/028, H04N 1/04

(54) **A printing and/or scanning device**

(30) Priority: 21.10.1996 KR 9647262
(71) Applicant: Samsung Electronics Co., Ltd., Suwon City, Kyungki-do (KR)
(72) Inventor: Jung, Jong-sung, Suwon, Kyonggi-do (KR)
(74) Representative: Tunstall, Christopher Stephen

(57) **Abstract**

A printing and scanning device for printing data onto and scanning data from a paper medium is described. The medium is fed along a feed direction and a print head module and scanner module are reciprocated relative to the medium along a scanning and printing path which cuts across the feed direction. The medium is uniformly illuminated along the full extent of the scanning and printing path. This allows uniform scanning quality and also helps to dry the ink printed on the medium by the print head module.

## Description

### BACKGROUND OF THE INVENTION

The present invention relates to printing and/or scanning machine, which is capable of obtaining a uniform output value of an image pick-up device and/or capable of uniformly drying printed ink.

Nowadays, office automation facilities such as printers and scanners are widely used. Such facilities of high efficiency are constantly being developed to improve and extend their functions and the price of such products is high. On the other hand, one product which has been produced to lessen the economic burden to users is a combined machine for printing and scanning.

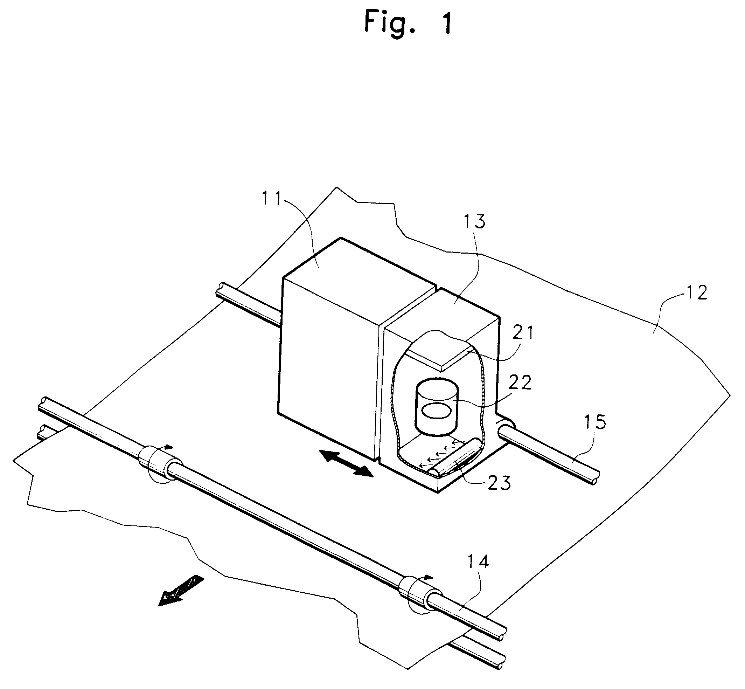

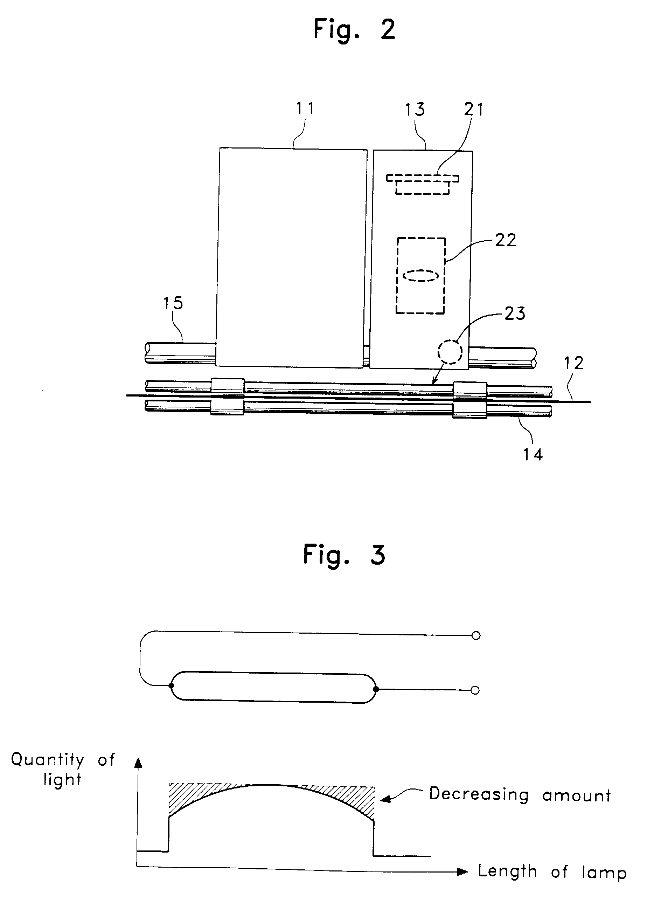

FIG. 1 is a perspective view showing a combined machine having a head module of a conventional ink-jet printer and a scanner module and FIG. 2 is a front view of the combined machine of FIG. 1. As illustrated, a head module 11 of the ink-jet printer which performs a printing operation by spraying ink on a printing medium 12 and a scanner module 13 which reads data from a document perform printing and scanning through reciprocation, according to the rotation of a driving motor (not illustrated), along a guide shaft 15.

Simultaneously, as a paper feeding roller 14 rotates, the printing medium or document is fed and each line of data is printed and/or scanned on a line unit. More specifically, the printing operation is performed by spraying ink from within the ink-jet printing head module 11 onto the printing medium 12 through a head unit (not illustrated) when the head module 11 and the scanner module 13 are moved to right and left.

Referring to FIG. 2, when the ink-jet printer head module 11 and the scanner module 13 are moved to right and left, with a lamp 23 inside the scanner module 13 illuminating the document, the reflection light on the surface of the document arrives at an image pick-up device 21 through a scanner glass (not illustrated) and a lens 22.

However, the conventional combined machine having a construction as described above has several problems.

First, as it takes a long time to dry ink injected by an ink-jet printer head unit onto the paper, it is difficult to perform printing at high speed. Occasionally, as the paper feed roller contacts an area where ink has not dried completely, ink can be spread on the paper.

As shown in FIG. 3, as the quantity of light in the central part is larger than the quantity at either side, the output value of the image pick-up device of the scanner module is non-uniform and it is impossible to perform high-resolution scanning.

Moreover, as the conventional combined machine has a small lamp inside the scanner module, the disassembly of the lamp is difficult, causing inconvenience to after-sales service providers.

### SUMMARY OF THE INVENTION

Therefore, it is an objective of the present invention to enhance the printing speed of a printing device. It is another objective of the present invention to ensure scanning of high resolution.

Accordingly, the present invention provides a scanning device for scanning data from a medium comprising:
means for feeding the medium along a feed direction;
means for scanning image data from the medium;
means for reciprocating the scanning means relative to the medium along a scanning path which cuts across the feed direction; and
means for uniformly illuminating the medium along the full extent of the scanning path.

The present invention also provides a printing and scanning device for printing data onto and scanning data from a medium comprising:
means for feeding the medium along a feed direction;
means for printing data onto the medium;
means for scanning image data from the medium;
means for reciprocating the printing and scanning means relative to the medium along a scanning and printing path which cuts across the feed direction; and
means for uniformly illuminating the medium along the full extent of the scanning and printing path.

Preferably, the means for uniformly illuminating the medium is separate from the scanning means.

The present invention also provides a printing device for printing data onto a medium comprising:
means for feeding the medium along a feed direction;
means for printing data onto the medium;
means for reciprocating the printing means relative to the medium along a printing path which cuts across the feed direction; and
means for uniformly illuminating the medium along the full extent of the printing path.

Preferably, the means for uniformly illuminating the medium is positioned relative to the printing means in the feed direction. The means for uniformly illuminating the medium is preferably adapted to radiate heat to dry the medium after it has been printed on by the printing means.

The means for uniformly illuminating the medium may be elongate and attached at its ends to, and releasable from, a frame. For example, the means for uniformly illuminating the medium may be a lamp. The means for uniformly illuminating the medium may be located in a recess that is formed in the printing means and/or the scanning means and faces the medium.

### BRIEF DESCRIPTION OF THE DRAWINGS

The present invention will now be described by way of example with reference to the accompanying drawings in which:
FIG. 1 is perspective view of a combined machine having a head module of a conventional ink-jet printer and a scanner module;
FIG. 2 is a front view showing the combined machine of FIG. 1;
FIG. 3 is a graph showing the distribution of the quantity of light according to the length of the lamp;
FIG. 4 is a perspective view showing a combined machine having a ink-jet printer head module and a scanner module according to the present invention;
FIG. 5A is a side view showing the operation of the ink-jet printer head module according to the present invention; and
FIG. 5B is a side view showing the scanner module according to the present invention.

### DETAILED DESCRIPTION OF THE PREFERRED EMBODIMENTS

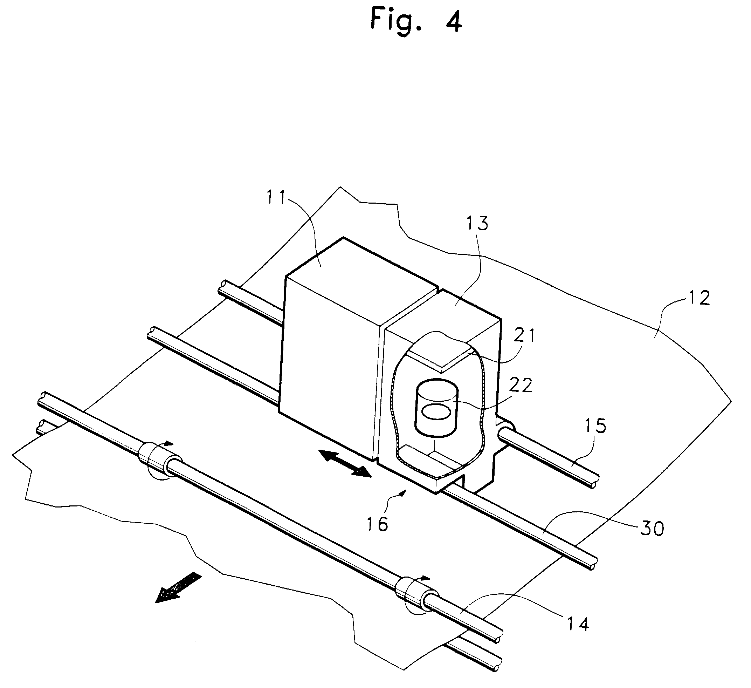

As shown in FIG. 4, a combined machine for printing and scanning includes a ink-jet printer head module 11 for performing the printing operation by spraying ink on a printing medium 12 and a scanner module 13 for reading data from a document. A guiding shaft 15 guides the ink-jet printer head module 11 and the scanner module 13 when printing and scanning are performed by reciprocation of the ink-jet printer head module 11 and the scanner module 13 according to the rotation of a driving motor (not illustrated). A long lamp 30 is provided across the printing medium 12 to irradiate the whole area so that the scanner module 13 can scan the data. A paper feeding roller 14 supplies the printing medium or document line by line.

A recess 16 is formed in the rear of the printing unit and the scanning unit, facing the printing medium 12 or document. Both ends of the long lamp 30 are fixed in a frame (not shown) inside of the combined machine.

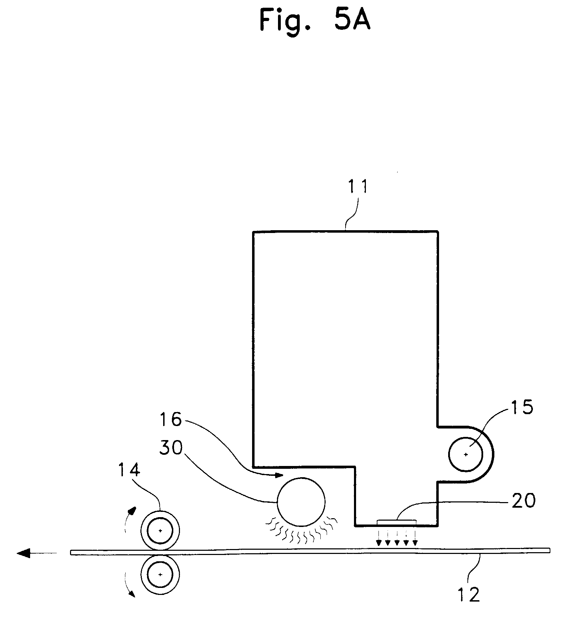

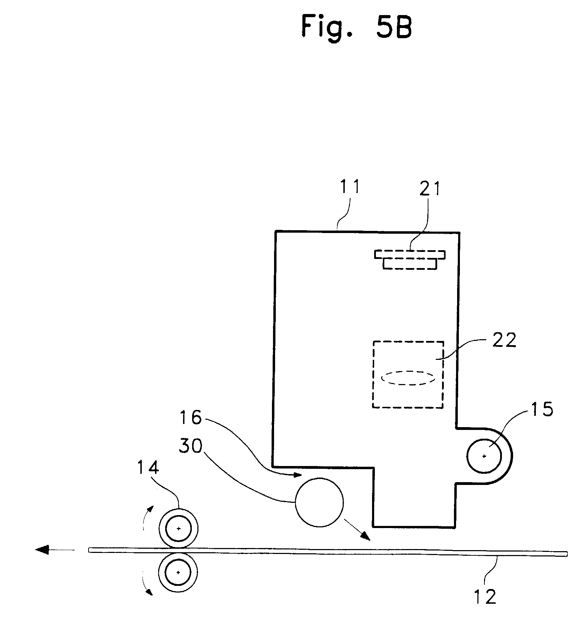

The operation of the ink-jet printer head module and the scanner module will now be described, referring to FIGs. 5A and 5B. As shown in the FIG. 5A, the printing operation is performed by spraying ink from a nozzle 20 provided underneath the ink-jet printer head module 11, adjacent a recess 16, onto the printing medium 12. After that, as the printing medium 12 is transported by the paper feeding roller 14 and the next line is provided, the printed line is moved toward the long lamp 30. Then, ink injected onto the printing medium is dried in a short time by the heat radiated from the long lamp 30. Accordingly, before the printed line passes the paper feeding roller 14, the ink becomes dry completely, preventing spreading of the ink on the paper by the paper feeding roller 14.

FIG. 5B is a sectional view showing the operation of the scanner module according to the present invention. As shown in the drawing, light from the long lamp 30 is irradiated on a line having data for scanning. When the scanner module 13 performs the reciprocation following the guiding shaft 15 on the document, the reflected light from the document arrives at an image pick-up device 21 through a scanner glass (not illustrated) and a lens 22. According to the present invention, as the long lamp 30 is located across the whole area where the scanner module travels over the document, an equal quantity of light is irradiated through the whole area and the output value of the image pick-up device becomes uniform, thus allowing high resolution scanning.

As shown in FIG. 4, as the long lamp 30 is separate from the head module 11 and the scanner module 13, when the lamp 30 is to be exchanged, the assembly of the lamp becomes easy and rapid after-sales service can be performed.

As described above, as the lamp used as a light source of the scanner module irradiates light over the whole area where the reciprocating movement is performed, it prevents the output of the ends of the lamp resulting in reduced scanning resolution, which can happen when a small lamp is used inside the scanner module. Moreover, as ink injected from the ink-jet printer head module is dried in a short time by the lamp provided at the read of the nozzle, spreading of ink can be prevented and printing at high speed can be performed. Additionally, as a long lamp is used and the lamp is provided outside the scanner module instead of inside the scanner module, disassembly can be easy and the after-sales service can be performed rapidly.

## Claims

1. A scanning device for scanning data from a medium comprising:
means for feeding the medium along a feed direction;
means for scanning image data from the medium;
means for reciprocating the scanning means relative to the medium along a scanning path which cuts across the feed direction; and
means for uniformly illuminating the medium along the full extent of the scanning path.

2. A printing and scanning device for printing data onto and scanning data from a medium comprising:
means for feeding the medium along a feed direction;
means for printing data onto the medium;
means for scanning image data from the medium;
means for reciprocating the printing and scanning means relative to the medium along a scanning and printing path which cuts across the feed direction; and
means for uniformly illuminating the medium along the full extent of the scanning and printing path.

3. A device according to claim 1 or claim 2 in which the means for uniformly illuminating the medium is separate from the scanning means.

4. A printing device for printing data onto a medium comprising:
means for feeding the medium along a feed direction;
means for printing data onto the medium;
means for reciprocating the printing means relative to the medium along a printing path which cuts across the feed direction; and
means for uniformly illuminating the medium along the full extent of the printing path.

5. A device according to claim 2 or claim 4 in which the means for uniformly illuminating the medium is positioned relative to the printing means in the feed direction.

6. A device according to claim 5 in which the means for uniformly illuminating the medium is adapted to radiate heat to dry the medium after it has been printed on by the printing means.

7. A device according to any preceding claim in which the means for uniformly illuminating the medium is elongate and attached at its ends to, and releasable from, a frame.

8. A device according to any preceding claim in which the means for uniformly illuminating the medium is a lamp.

9. A printing or scanning device according to any preceding claim in which the means for uniformly illuminating the medium is located in a recess that is formed in the printing means and/or the scanning means and faces the medium.

10. A printing and scanning device as described with reference to and as illustrated in Figs. 4, 5A and 5B of the accompanying drawings.
